# EUROPEAN PATENT APPLICATION

(11) **EP 4 503 312 A1**
(43) Date of publication of application: **05.02.2025**
(21) Application number: 22934269.6
(22) Date of filing: 31.03.2022
(51) Int. Cl.: H01M 50/489, H01M 50/411, H01M 10/0525

(54) **DIAPHRAGM, ELECTROCHEMICAL DEVICE CONTAINING SAME, AND ELECTRONIC DEVICE**

(71) Applicant: Ningde Amperex Technology Limited, Ningde, Fujian 352100 (CN)
(72) Inventor: XIAO, Wenwu, Ningde, Fujian 352100 (CN); WEI, Zengbin, Ningde, Fujian 352100 (CN)
(74) Representative: Klunker IP Patentanwälte PartG mbB
(86) International application number: PCT/CN2022/084651
(87) International publication number: WO 2023/184432

(57) **Abstract**

This application provides a separator, an electrochemical device including the separator, and an electronic device, where the separator includes a porous substrate and a porous coating disposed on at least one surface of the porous substrate, where the porous coating includes a polymer, and the polymer includes polymer particles; and in a 130µm×100µm region on a surface of the porous coating, the number of polymer particles with a maximum diameter in a range of 5µm to 14µm is 100 to 180. The separator has large-particle size polymer that can increase the interface gap at the corners of the electrochemical device. Thus, for the electrochemical device, the electrolyte at the corner interfaces can achieve good infiltration during the charge-discharge cycling process, effectively alleviating the corner purple/black spot problem of the electrochemical device.

## Description

### TECHNICAL FIELD

This application relates to the field of electrochemical technologies, and specifically, to a separator, an electrochemical device containing the separator, and an electronic device.

### BACKGROUND

Electrochemical devices, such as batteries, are widely used in wearable devices, smart phones, drones, notebook computers, and other fields because of their merits such as high working voltages, high energy density, environmental friendliness, and stable cycling. With the development of modern information technologies and expanded application of electrochemical devices, the comprehensive performance requirements for batteries are becoming increasingly stringent.

As an important component of batteries, the separator is crucial to the overall performance of the battery. However, when existing separators are used in batteries, the interface gap at the battery corners is small. During the charge-discharge cycling process, the corners are prone to issues that the electrolyte cannot infiltrate due to compression, leading to corner purple/black spot problems.

### SUMMARY

This application provides a separator, an electrochemical device containing the separator, and an electronic device, in order to address the issue of corner purple/black spots in electrochemical devices.

It should be noted that in the invention content of this application, a lithium-ion battery is used as an example of an electrochemical device to explain this application. However, the electrochemical device of this application is not limited to the lithium-ion battery.

A first aspect of this application provides a separator, where the separator includes a porous substrate and a porous coating disposed on at least one surface of the porous substrate, where the porous coating includes a polymer, the polymer including polymer particles; and in a 130µm×100µm region on a surface of the porous coating, the number of polymer particles with a maximum diameter in a range of 5µm to 14µm is 100 to 180.

When the separator in this application is observed using a scanning electron microscope (SEM) at 500x magnification, in a 130µm×100µm region (that is, a region observable through one eyepiece), the number of polymer particles with a maximum diameter in a range of 5µm to 14µm is 100 to 180. Through the regulation of the number of polymer particles with a maximum diameter in a range of 5µm to 14µm within the above range, the large particle size (maximum diameter in a range of 5µm to 14µm) polymers in the separator act as a buffer and create a gap at the corners of the electrochemical device, thereby increasing the interface gap at the corners of the electrochemical device. Thus, for the electrochemical device, the electrolyte at the corner interfaces can achieve good infiltration during the charge-discharge cycling process. As a result, the issue of corner purple/black spots in the electrochemical device is effectively alleviated. Furthermore, compared to the conventional particle size polyvinylidene fluoride-hexafluoropropylene (PVDF-HFP) copolymer commonly used in the prior art, the large particle size polymer particles used in this application have a lower softening point, making it easier to play a bonding role in the electrochemical device, increasing the adhesion force between the separator and the positive electrode or negative electrode, and alleviating the deformation problems of the electrochemical device caused by the expansion of the negative electrode. The purple spots or black spots in this application are known purple spots or black spots in the field.

The porous coating of this application is provided on at least one surface of the porous substrate. Specifically, the porous coating is provided on one surface of the porous substrate, or the porous coatings are provided on both surfaces of the porous substrate, where the surface of the porous substrate refers to the two opposing surfaces along its thickness direction. Persons skilled in the art should understand that the porous coating can be provided on the entire surface or part of the surface of the porous substrate as long as the purpose of this application can be achieved. Both the porous substrate and the porous coating in this application have a pore structure. For example, the pore size of the porous substrate is 10nm to 60nm, and the porosity of the porous coating is 30% to 55%.

Thicknesses of the porous substrate and the porous coating are not particularly limited in this application, provided that the objectives of this application can be achieved. For example, a thickness ratio of the porous coating to the porous substrate is 1:2 to 1:5, a thickness of the porous substrate is 12µm to 40µm, and a thickness of the porous coating can be 5µm to 20µm. In this application, the thickness of the porous coating refers to a thickness of a single layer of the porous coating on any surface of the porous substrate.

In this application, a material of the porous substrate may include but is not limited to at least one of polyethylene, polypropylene, polyethylene terephthalate, or polyimide. Preferably, a material of the porous substrate includes polypropylene with a weight-average molecular weight of 100000 to 1000000. The weight-average molecular weight of the polypropylene being too low (for example, less than 100000) affects the adhesion between the porous substrate and the porous coating, thereby affecting the packaging performance of the electrochemical device. The weight-average molecular weight of the polypropylene being too high (for example, greater than 1000000) affects the thickness consistency of the porous coating, thereby affecting the thickness consistency of the separator and the packaging performance of the electrochemical device. Through the regulation of the weight-average molecular weight of the polypropylene in the porous substrate material within the above range, for example, the weight-average molecular weight of the polypropylene may be 100000, 200000, 400000, 600000, 800000, 1000000, or any range in between, the packaging performance of the electrochemical device can be effectively improved.

In an embodiment of this application, in a 130µm×100µm region on the surface of the porous coating, the number of polymer particles with a maximum diameter less than 5µm is 10 to 40, and the number of polymer particles with a maximum diameter greater than 14µm is 0 to 10. Through the regulation of the number of polymer particles with a maximum diameter less than 5µm and the number of polymer particles with a maximum diameter greater than 14µm within the above ranges, the majority of polymer particles in any 130µm×100µm region of the porous coating surface have a maximum diameter in a range of 5µm to 14µm. When the particle size distribution of the polymer particles in the porous coating is in this state, the porous coating maintains its adhesion force while the polymer particles generally have a large particle size. The large-diameter polymer particles in the separator can act as a buffer and create a gap at the corners of the electrochemical device, thereby increasing the corner interface gaps of the electrochemical device. In this way, for the electrochemical device using a separator with the foregoing porous coating, the electrolyte at the corner interfaces can achieve good infiltration during the charge-discharge cycling process. As a result, the issue of corner purple/black spots in the electrochemical device is effectively alleviated.

In an embodiment of this application, the polymer particles have particle sizes satisfying: 1µm≤Dᵥ10≤3µm, 4µm≤Dᵥ50≤8µm, and 7µm≤Dᵥ90≤20µm. For example, Dᵥ10 can be 1µm, 1.5µm, 2µm, 2.5µm, 3µm, or any range in between; Dᵥ50 can be 4µm, 5µm, 6µm, 7µm, 8µm, or any range in between; and Dᵥ90 can be 7µm, 9µm, 12µm, 15µm, 17µm, 20µm, or any range in between. Using polymers with the foregoing particle sizes is more conducive to improving the thickness consistency of the separator, thereby enhancing the packaging performance of the electrochemical device. In addition, the particle sizes of the polymers falling within the specified ranges are more favorable for ensuring that the majority of polymer particles in any 130µm × 100µm region of the porous coating surface have a maximum diameter in a range of 5µm to 14µm. When the particle size distribution of the polymer particles in the porous coating is in this state, the porous coating maintains its adhesion force while the polymer particles generally have a large particle size. The large-diameter polymer particles in the separator can act as a buffer and create a gap at the corners of the electrochemical device, thereby increasing the corner interface gaps of the electrochemical device. In this way, for the electrochemical device using a separator with the foregoing porous coating, the electrolyte at the corner interfaces can achieve good infiltration during the charge-discharge cycling process. As a result, the issue of corner purple/black spots in the electrochemical device is effectively alleviated. In this application, Dᵥ10 is a particle size of the particles where the cumulative distribution by volume reaches 10% as counted from the small particle size side. Dᵥ50 is a particle size of the particles where the cumulative distribution by volume reaches 50% as counted from the small particle size side. Dᵥ90 is a particle size of the particles where the cumulative distribution by volume reaches 90% as counted from the small particle size side.

In an embodiment of this application, the polymer is composed of at least one of polyvinylidene fluoride, polyacrylate, styrene-butadiene rubber, polyacrylamide, or polyolefin; where the polyacrylate is polymerized from at least one of the following monomers: styrene, butadiene, methyl methacrylate, acrylonitrile, acrylic acid, methacrylic acid, isobutyl acrylate, isobutyl methacrylate, butyl acrylate, butyl methacrylate, isooctyl acrylate, isooctyl methacrylate, methyl acrylate, or epoxymethyl methacrylate; and a monomer forming the polyolefin is an olefin with 19 to 35 carbon atoms. Preferably, the polymer is composed of at least one of polyvinylidene fluoride, polystyrene-isobutyl acrylate, polystyrene-isooctyl acrylate, or styrene-butadiene rubber. In this application, polyvinylidene fluoride includes polyvinylidene fluoride homopolymer and PVDF-HFP, where a mass percentage of hexafluoropropylene (HFP) in PVDF-HFP is greater than 0% and less than or equal to (less than or equal to) 5%. The polymer of the above components has good thermal stability and electrolyte resistance. Its cross-linked structure allows it to be irregularly distributed in the porous coating and have high adhesion force, ensuring the adhesion between the porous substrate and the porous coating, alleviating the gelation phenomenon of the separator, and thereby enhancing the packaging performance of the electrochemical device. Additionally, the separator containing the above polymer also has good adhesion between the positive electrode and the negative electrode, which can inhibit deformation issues caused by the swelling of the negative electrode, thereby improving the structural stability of the electrochemical device. Particularly, for polymers containing polar functional groups such as carboxyl groups or hydroxyl groups, they can improve the affinity of the electrolyte to sufficiently infiltrate the separator and enhance the adhesion between the separator and the positive electrode, and between the separator and the negative electrode. On the basis of alleviating the gelation phenomenon of the separator, this is further conducive to improving the structural stability of the electrochemical device. Moreover, the above polymers are relatively low-cost, which helps to control the cost of the separator.

In an embodiment of this application, the porous coating further includes an auxiliary binder, a wetting agent, and a thickener; where based on a mass of the porous coating, a mass percentage of the polymer is 76.5% to 92.5%, a mass percentage of the auxiliary binder is 4% to 20%, a mass percentage of the wetting agent is 3% to 5%, and a mass percentage of the thickener is 0.5% to 1%. Preferably, the mass percentage of the polymer is 80% to 90%, the mass percentage of the auxiliary binder is 5% to 10%, the mass percentage of the wetting agent is 3%, and the mass percentage of the thickener is 0.5%. For example, the mass percentage of the polymer may be 76.5%, 78%, 80%, 82%, 84%, 85%, 86%, 88%, 90%, 92%, 92.5% or any range in between; the mass percentage of the auxiliary binder may be 4%, 5%, 10%, 15%, 17.5% or any range in between; the mass percentage of the thickener may be 0.5%, 0.6%, 0.7%, 0.8%, 0.9%, 1% or any range in between; and the mass percentage of the wetting agent may be 3%, 3.5%, 4%, 4.5%, 5% or any range in between. The mass percentage of the polymer being too low (for example, less than 76.5%) affects the adhesion between the porous substrate and the porous coating, such as adhesion force and/or adhesion area; when the mass percentage of the polymer is too high (for example, greater than 92.5%), the polymer easily clogs the pore structure of the porous substrate, affecting the transport of lithium ions, and even causing lithium precipitation and corner purple/black spot phenomena in the electrochemical device. Through the regulation of the mass percentages of the polymer, auxiliary binder, wetting agent, and thickener in the porous coating within the above ranges, the resulting separator has good thickness consistency, and the large-particle size polymer in the separator increases the interface gap at the corners of the electrochemical device. Thus, for the electrochemical device, the electrolyte at the corner interfaces can achieve good infiltration during the charge-discharge cycling process, effectively alleviating the corner purple/black spot problem of the electrochemical device. The auxiliary binder, thickener, and wetting agent are not particularly limited in this application, provided that the objectives of this application can be achieved. For example, the auxiliary binder may include but is not limited to at least one of cyclohexyl methacrylate, isobutyl acrylate, or methyl methacrylate; the thickener may include but is not limited to at least one of sodium carboxymethyl cellulose, sodium alginate, or gelatin; and the wetting agent may include but is not limited to at least one of alkyl naphthalene sulfonate, sodium dodecylbenzene sulfonate, or polyoxyethylene fatty alcohol ether.

In an embodiment of this application, a glass transition temperature (Tg) of the polymer is 40°C to 65°C. The Tg of the polymer being too low (for example, less than 40°C) easily causes adhesion between the porous substrate and the porous coating during the post-treatment (for example, drying treatment) of the separator, clogging the pore structure of the porous substrate and the porous coating, affecting the transport of lithium ions, and leading to lithium precipitation and corner purple/black spot phenomena in the electrochemical device. The Tg of the polymer being too high (for example, greater than 65°C) affects the adhesion between the porous substrate and the porous coating, creating a risk of deformation in the electrochemical device due to insufficient adhesion. For example, the Tg of the polymer may be 40°C, 45°C, 50°C, 55°C, 60°C, 65°C or any range in between. Through the regulation of the Tg of the polymer within the above ranges, the corner purple/black spot problem of the electrochemical device is alleviated, and on this basis, other performances of the electrochemical device, such as the transport performance of lithium ions and the structural stability of the electrochemical device, are not affected.

In an embodiment of this application, a swelling degree of the polymer is 50% to 150%. The swelling degree of the polymer being too small (for example, less than 50%) affects the adhesion between the porous substrate and the porous coating, such as adhesion force and/or adhesion area. When the swelling degree of the polymer in the test electrolyte is too large (for example, greater than 150%), the polymer easily clogs the pore structure of the porous substrate, affecting the transport of lithium ions, and even causing lithium precipitation and black spot phenomena in the electrochemical device. Through the regulation of the swelling degree of the polymer within the above range, for example, the swelling degree of the polymer may be 50%, 60%, 70%, 80%, 90%, 100%, 110%, 120%, 130%, 140%, 150% or any range in between, the adhesion between the porous substrate and the porous coating is ensured, and the gelation phenomenon of the separator is alleviated, thereby helping to alleviate the corner purple/black spot problem of the electrochemical device. In this application, the above mentioned swelling degree is a commonly known swelling degree in the art.

In an embodiment of this application, a sphericity of the polymer is greater than or equal to 0.7 and less than 1.0. The sphericity of the polymer being too low (for example, less than 0.7), the polymer dissolves into the pore structure covering the porous substrate, affecting the transport of lithium ions, resulting in lithium precipitation and corner purple/black spot phenomena in the electrochemical device. Through the regulation of the sphericity of the polymer within the above range, for example, the sphericity of the polymer may be 0.7, 0.75, 0.8, 0.85, 0.9, 0.95, 0.99 or any range in between, the corner purple/black spot problem of the electrochemical device is alleviated, and on this basis, the lithium ion transport performance in the electrochemical device, such as kinetic performance, is not affected either. In this application, the above sphericity is a commonly known sphericity in the prior art.

In an embodiment of this application, an adhesion force of the porous coating is 2N/m to 6N/m; When the adhesion force of the porous coating is too low (for example, less than 2N/m), the electrochemical device easily deforms in the later stages of the charge-discharge cycle. When the adhesion force of the porous coating is too high (for example, greater than 6N/m), poor electrolyte infiltration easily occurs in the main region outside the corner region of the electrochemical device, leading to corner purple/black spot problems. Regulating the adhesion force of the porous coating within the above range is more conducive to alleviating the corner purple/black spot problem and the deformation problem in the later stages of the cycle of the electrochemical device. In this application, the adhesion force of the porous coating is wet-press adhesion force.

In an embodiment of this application, a water contact angle of the porous coating is 60° to 90°. The water contact angle of the porous coating is regulated within the above range, for example, the water contact angle of the porous coating may be 60°, 61°, 70°, 75°, 80°, 85°, 90° or any range in between. This indicates that the separator has good wettability and can be fully infiltrated by the electrolyte. In this application, the above water contact angle is a commonly known water contact angle in the prior art.

In an embodiment of this application, a surface density of the porous coating is 0.1g/m² to 0.4g/m². The surface density of the porous coating being too low (for example, less than 0.1g/m²) affects the adhesion between the porous substrate and the porous coating. The surface density of the porous coating being too high (for example, greater than 0.4g/m²) affects the transport of lithium ions, causing lithium precipitation and corner purple/black spot phenomena in the electrochemical device. Through the regulation of the surface density of the porous coating within the range of this application, for example, the surface density of the porous coating may be 0.1g/m², 0.15g/m², 0.2g/m², 0.25g/m², 0.3g/m², 0.35g/m², 0.4g/m² or any range in between, the corner purple/black spot problem of the electrochemical device is alleviated, and on this basis, the lithium ion transport performance in the electrochemical device is not affected.

In an embodiment of this application, a thickness covariance value (COV) of the separator is 0.01 to 0.02. For example, the thickness COV of the separator may be 0.01, 0.012, 0.014, 0.016, 0.018, 0.02 or any range in between, indicating that the separator has good thickness consistency, which is conducive to improving the sealing performance of the electrochemical device. For example, for an electrochemical device containing multiple tabs, this can improve the winding yield of the electrochemical device. In this application, the above tab and winding yield are commonly known tab and winding yield in the art, and the above thickness COV is a commonly known thickness COV in the prior art.

In an embodiment of this application, a thickness range value of the separator is 0µm to 3.3µm. For example, the thickness range value of the separator may be 0µm, 1µm, 2µm, 3µm, 3.1µm, 3.2µm, 3.3µm or any range in between, indicating that the separator has good thickness consistency, which is conducive to improving the packaging performance of the electrochemical device. For example, for an electrochemical device containing multiple tabs, this can improve the winding yield of the electrochemical device.

In an embodiment of this application, an ionic resistance of the separator is 0.5Q to 1.5Q. For example, the ionic resistance of the separator may be 0.5Ω, 0.7Ω, 0.952, 1.152, 1.352, 1.5Q or any range in between. When the ionic resistance of the separator is too low (for example, less than 0.5Q), the ion transport speed of the separator is relatively fast, causing the electrochemical device to easily heat up, which affects the safety performance of the electrochemical device. When the ionic resistance of the separator is too high (for example, greater than 1.5Q), the electrochemical device is more prone to purple/black spot problems. Regulating the ionic resistance of the separator within the above range is more conducive to alleviating the corner purple/black spot problem of the electrochemical device.

The preparation method of the separator is not particularly limited in this application, provided that the objectives of this application can be achieved. For example, the preparation method of the separator may include but is not limited to the following steps: adding the substances (such as the polymer, binder, wetting agent, and thickener) used in the porous coating into a solvent and mixing them evenly to obtain a porous coating slurry, then applying the porous coating slurry on a surface of the porous substrate, followed by drying treatment to obtain the separator. The above solvent is not particularly limited in this application, provided that the objectives of this application can be achieved. For example, the solvent may include but is not limited to at least one of water, ethanol, N-methylpyrrolidone (NMP), or dimethylacetamide. The above applying method is not particularly limited in this application, provided that the objectives of this application can be achieved. For example, the applying method may be rotary spraying method and micro gravure coating method, with the micro gravure coating method being preferred. Adopting the micro gravure coating method is more conducive to alleviating the corner purple/black spot problem of the electrochemical device. Additionally, the separator prepared by the micro gravure coating method has better thickness consistency. Due to the further selection of substances used in the porous coating in this application, the separator is also more resistant to electrolyte and high temperatures, which helps solve the gelation problem of high-temperature sprayed separators and also reduces production costs.

A second aspect of this application provides an electrochemical device, including the separator according to any one of the foregoing embodiments.

In an embodiment of this application, the electrochemical device further includes an electrolyte, where the electrolyte includes carboxylic acid ester; where based on a mass of the electrolyte, a mass percentage of the carboxylic acid ester is 10% to 65%. The mass percentage of the carboxylic acid ester being too high (for example, greater than 60%) affects the high-temperature performance of the electrochemical device. The mass percentage of the carboxylic acid ester is regulated within the above range, for example, the mass percentage of the carboxylic acid ester may be 10%, 20%, 30%, 40%, 50%, 60%, 65%, or any range in between. This alleviates the corner purple/black spot problem of the electrochemical device, and on this basis, it is conducive to improving the high-temperature performance of the electrochemical device.

In an embodiment of this application, the carboxylic acid ester includes at least one of butyl propionate, amyl propionate, γ-butyrolactone, γ-valerolactone, methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl valerate, ethyl valerate, methyl pivalate, or ethyl pivalate. The above mentioned carboxylic acid ester is not prone to react with the above separator, helping to inhibit the gelation phenomenon of the separator, thereby improving the packaging performance of the electrochemical device. Additionally, the arrangement of large-particle size polymer effectively alleviates the corner purple/black spot problem of the electrochemical device.

In this application, the electrolyte may further include another non-aqueous solvent. The another non-aqueous solvent is not particularly limited in this application, provided that the objectives of this application can be achieved. For example, the non-aqueous solvent may include but is not limited to at least one of carbonate compound, ether compound, or another organic solvent. The carbonate compound may include but is not limited to at least one of a linear carbonate compound, a cyclic carbonate compound, or a fluorocarbonate compound. The linear carbonate compound may include but is not limited to at least one of dimethyl carbonate (DMC), diethyl carbonate (DEC), dipropyl carbonate (DPC), methyl propyl carbonate (MPC), ethylene propyl carbonate (EPC), or methyl ethyl carbonate (MEC). The cyclic carbonate may include but is not limited to at least one of ethylene carbonate (EC), propylene carbonate (PC), butylene carbonate (BC), or vinyl ethylene carbonate (VEC). The fluorocarbonate compound may include but is not limited to at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methyl ethylene carbonate, 1,2-difluoro-1-methylethylene carbonate, 1,1,2-trifluoro-2-methylethylene carbonate, or trifluoromethylethylene carbonate. The ether compound may include but is not limited to at least one of ethylene glycol dimethyl ether, diethylene glycol dimethyl ether, tetraethylene glycol dimethyl ether, dibutyl ether, tetrahydrofuran, 2-methyltetrahydrofuran, 1,3-dioxane, 1,4-dioxane, or 1,3-dioxolane. The another organic solvent may include but is not limited to at least one of ethyl vinyl sulfone, methyl isopropyl sulfone, isopropyl sec-butyl sulfone, sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, or phosphate ester. Based on the mass of the electrolyte, a mass percentage of the another non-aqueous solvent is 5% to 80%, for example, 5%, 10%, 20%, 30%, 40%, 50%, 60%, 70%, 80% or any range in between.

In this application, the electrolyte may further include a lithium salt, and the lithium salt is not particularly limited in this application, provided that the objectives of this application can be achieved. For example, the lithium salt may include but is not limited to at least one of lithium hexafluorophosphate (LiPF₆), LiAsF₆, LiClO₄, LiCH₃SO₃, LiCF₃SO₃, LiN(SO₂CF₃)₂, LiC(SO₂CF₃)₃, or LiSiF₆, with LiPF₆ being preferred.

In this application, the positive electrode is the positive electrode in the electrochemical device, and the positive electrode usually includes a positive electrode current collector and a positive electrode material layer. In this application, a positive electrode current collector is not particularly limited, provided that the objectives of this application can be achieved. For example, the positive electrode current collector may include but is not limited to aluminum foil, aluminum alloy foil, or a composite current collector. In this application, thickness of the positive electrode current collector is not particularly limited, provided that the objectives of this application can be achieved. For example, the thickness of the positive electrode current collector is 8µm to 12µm. In this application, a positive electrode material layer may be provided on one or two surfaces of the positive electrode current collector in a thickness direction of the positive electrode current collector. It should be noted that the "surface" herein may be an entire region or a partial region of the positive electrode current collector. This is not particularly limited in this application, provided that the objectives of this application can be achieved.

In this application, the positive electrode material layer includes a positive electrode active material, and there are no particular limitations on the positive electrode active material in this application, as long as the purpose of this application can be achieved. For example, it may include but is not limited to at least one of lithium or transition metal element composite oxide, sulfide, selenide, or halide. There are no particular limitations on the above mentioned transition metal elements in this application, as long as the purpose of this application can be achieved. For example, it can include at least one of nickel, manganese, cobalt, or iron. Specifically, the positive electrode active material may include at least one of LiCoO₂, LiNiO₂, LiMnO₂, LiMn₂O₄, Li(Niₐ₁Co_{b1}Mn_{c1})O₂ (0<a1<1, 0<b1<1, 0<c1<1, and a1+b1+c1=1), LiMn₂O₄LiNi_{1-y1}Co_{y1}O₂ (0<y1<1), LiCo_{1-y2}Mn_{y2}O₂ (0<y2<1), LiNi_{1-y3}Mn_{y3}O₂ (0<y3<1), Li (Niₐ₂Mn_{b2}Co_{c2})O₄ (0<a2<2, 0<b2<2, 0<c2<2, and a2+b2+c2=2), LiMn_{2-z1}Ni_{z1}O₄ (0<z1<2), LiMn_{2-z2}Co_{z2}O₄ (0<z2<2), Li(Niₐ₃Co_{b3}Al_{c3})O₂ (0<a3<1, 0<b3<1, 0<c3<1, and a3+b3+c3=1), LiCoPO₄, or LiFePO₄.

The positive electrode material layer may further include a binder. The binder is not particularly limited in this application, provided that the objectives of this application can be achieved. For example, the positive electrode binder may include but is not limited to at least one of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, acrylic styrene-butadiene rubber, epoxy resin, or nylon.

In this application, the positive electrode material layer may further include a conductive agent, and the conductive agent is not particularly limited in this application, provided that the objectives of this application can be achieved. For example, the conductive agent may include but is not limited to at least one of natural graphite, artificial graphite, conductive carbon black (Super P), carbon nanotubes (CNTs), carbon fiber, flake graphite, Ketjen black, graphene, a metal material, or a conductive polymer. The carbon nanotubes may include but are not limited to single-walled carbon nanotubes and/or multi-walled carbon nanotubes. The carbon fiber may include but is not limited to vapor grown carbon fiber (VGCF) and/or carbon nanofiber. The metal material may include but is not limited to metal powder and/or metal fiber, and specifically, the metal may include but is not limited to at least one of copper, nickel, aluminum, or silver. The conductive polymer may include but is not limited to at least one of polyphenylene derivative, polyaniline, polythiophene, polyacetylene, or polypyrrole.

Optionally, the positive electrode may further include a conductive layer, and the conductive layer is sandwiched between the positive electrode current collector and the positive electrode material layer. Composition of the conductive layer is not particularly limited in this application, and the conductive layer may be a conductive layer commonly used in the art. For example, the conductive layer may include but is not limited to the foregoing conductive agent and binder.

In this application, the negative electrode is the negative electrode in the electrochemical device, and the negative electrode usually includes a negative electrode current collector and a negative electrode material layer. The negative electrode current collector is not particularly limited in this application, provided that the objectives of this application can be achieved. For example, the negative electrode current collector may include but is not limited to copper foil, copper alloy foil, nickel foil, stainless steel foil, titanium foil, foamed nickel, foamed copper, or a composite current collector. In this application, thickness of the negative electrode current collector is not particularly limited, provided that the objectives of this application can be achieved. For example, the thickness of the negative electrode current collector is 4µm to 12µm. In this application, the negative electrode material layer may be provided on one or two surfaces of the negative electrode current collector in a thickness direction of the negative electrode current collector. It should be noted that the "surface" herein may be the entire zone of the negative electrode current collector or a partial zone of the negative electrode current collector. This is not particularly limited in this application, provided that the objective of this application can be achieved.

In this application, the negative electrode material layer includes a negative electrode active material, and the negative electrode active material is not particularly limited, provided that the objectives of this application can be achieved. For example, the negative electrode active material may include but is not limited to at least one of a material capable of reversibly intercalating/deintercalating lithium ions, lithium metal, a lithium metal alloy, a material capable of doping/de-doping lithium, or a transition metal oxide.

The material capable of reversibly intercalating/deintercalating lithium ions may include but is not limited to a carbon material, where the carbon material includes crystalline carbon and/or amorphous carbon. The crystalline carbon may include but is not limited to amorphous or plate-like, small-flake, spherical, or fibrous natural graphite, artificial graphite, pyrolytic carbon, mesophase pitch-based carbon fibers, mesophase carbon microbeads, mesophase pitch, or high temperature calcined carbon (such as petroleum or coke derived from coal tar pitch). The amorphous carbon may include but is not limited to at least one of soft carbon, hard carbon, a mesophase pitch carbonization product, or calcined coke. The lithium metal alloy includes lithium and at least one metal of Na, K, Rb, Cs, Fr, Be, Mg, Ca, Sr, Si, Sb, Pb, In, Zn, Ba, Ra, Ge, Al, or Sn. The material capable of doping/de-doping lithium may include but is not limited to Si, SiOₓ (0<x≤2), a Si/C composite, a Si-Q alloy (where Q includes at least one of an alkali metal, an alkaline earth metal, a group 13 to 16 element, a transition element, or a rare earth element, but it should not be Si), Sn, SnO2, an Sn-C composite, Sn-R (where R includes at least one of an alkali metal, an alkaline earth metal, a group 13 to 16 element, a transition element, or a rare earth element, but it should not be Sn), and the like. Q and R each independently include at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, or Po. The transition metal oxide may include but is not limited to vanadium oxide and/or lithium vanadium oxide.

In this application, the negative electrode material layer may further include a conductive agent. The conductive agent is not particularly limited in this application, provided that the objectives of this application can be achieved. For example, the conductive agent may include but is not limited to at least one of the foregoing conductive agents.

In this application, the negative electrode material layer may further include a binder. The binder is not particularly limited in this application, provided that the objectives of this application can be achieved. For example, the binder may include but is not limited to at least of the foregoing binders.

Optionally, the negative electrode may further include a conductive layer, and the conductive layer is sandwiched between the negative electrode current collector and the negative electrode material layer. Composition of the conductive layer is not particularly limited in this application, the conductive layer may be a conductive layer commonly used in the art, and the conductive layer may include but is not limited to the foregoing conductive agent and binder.

The electrochemical device in this application is not particularly limited, and may include any apparatus in which an electrochemical reaction occurs. In some embodiments, the electrochemical device may include but is not limited to a lithium metal secondary battery, a lithium-ion secondary battery (lithium-ion battery), a lithium polymer secondary battery, or a lithium-ion polymer secondary battery.

A preparation process of the electrochemical device is well known to a person skilled in the art, and is not particularly limited in this application. For example, the preparation process may include but is not limited to the following steps: A positive electrode, a separator, and a negative electrode are stacked in sequence and go through operations such as winding and folding as needed to obtain an electrode assembly with a winding structure, the electrode assembly is put into a packaging bag, and the packaging bag is injected with an electrolyte and sealed to obtain an electrochemical device; or a positive electrode, a separator, and a negative electrode are stacked in sequence, four corners of the entire laminated structure are fixed with tapes to obtain an electrode assembly with a laminated structure, the electrode assembly is put into a packaging bag, and the packaging bag is injected with an electrolyte and sealed to obtain an electrochemical device. In addition, an overcurrent prevention element, a guide plate, and the like may also be placed into the packaging bag as needed, so as to prevent pressure increase, overcharge, and overdischarge inside the electrochemical device.

A third aspect of this application provides an electronic device, including the electrochemical device according to any one of the foregoing embodiments. The electronic device of this application is not particularly limited, and the electronic device may be any known electronic device used in the prior art. In some embodiments, the electronic device may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

This application provides a separator, an electrochemical device including the separator, and an electronic device, where the separator includes a porous substrate and a porous coating disposed on at least one surface of the porous substrate, where the porous coating includes a polymer, and the polymer includes polymer particles; and in a 130µm×100µm region on a surface of the porous coating, the number of polymer particles with a maximum diameter in a range of 5µm to 14µm is 100 to 180. The separator provided in the above solution has large-particle size polymer that can act as a buffer and create a gap at the corners, increasing the interface gap at the corners of the electrochemical device. Thus, for the electrochemical device, the electrolyte at the corner interfaces can achieve good infiltration during the charge-discharge cycling process, effectively alleviating the corner purple/black spot problem of the electrochemical device. Furthermore, compared to the prior art, the large particle size polymer particles used in this application have a lower softening point, making it easier to play a bonding role in the electrochemical device, increasing the adhesion force between the separator and the positive electrode or negative electrode, and alleviating the deformation problems of the electrochemical device caused by the expansion of the negative electrode.

### BRIEF DESCRIPTION OF DRAWINGS

To describe technical solutions in the embodiments of this application and the prior art more clearly, the following briefly describes accompanying drawings required in the embodiments and the prior art. Apparently, the accompanying drawings in the following descriptions show merely some embodiments in this application, and persons of ordinary skill in the art may derive other drawings from these accompanying drawings.
FIG. 1 is a schematic diagram showing a sectional structure of a separator according to an embodiment of this application;
FIG. 2 is a schematic diagram showing a sectional structure of a separator according to another embodiment of this application;
FIG. 3 is an SEM photograph of polymer particles on a surface of the porous coating according to example 1-3 of this application; and
FIG. 4 is an SEM photograph of polymer particles on a surface of the porous coating according to comparative example 1 of this application.

### DESCRIPTION OF EMBODIMENTS

To make the objectives, technical solutions, and advantages of this application more comprehensible, the following describes this application in detail with reference to accompanying drawings and embodiments. Apparently, the described embodiments are merely some but not all of the embodiments of this application. All other embodiments obtained by persons of ordinary skill in the art based on the embodiments of this application fall within the protection scope of this application.

It should be noted that, in the specific embodiments of this application, a lithium-ion battery is used as an example of an electrochemical device to explain this application. However, the electrochemical device in this application is not limited to the lithium-ion battery.

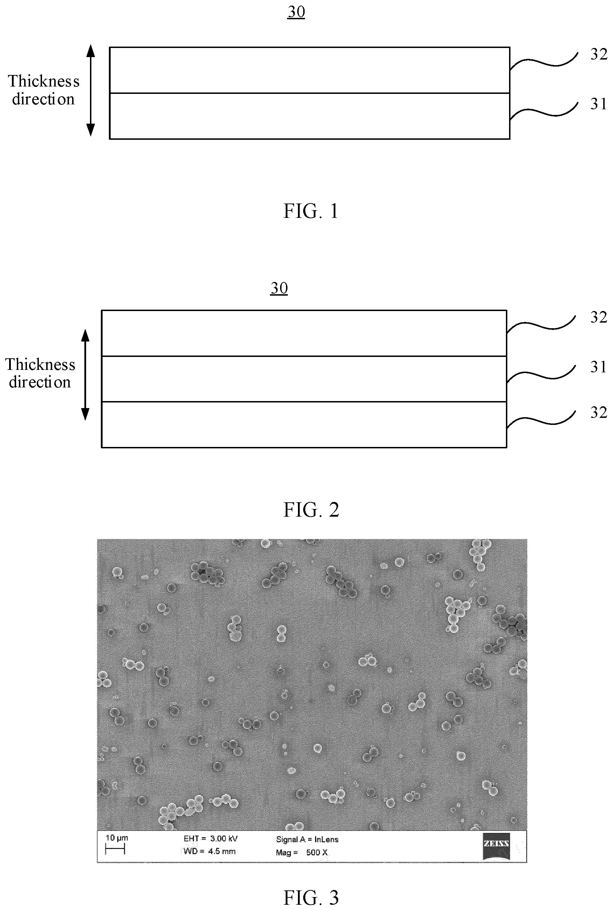

As shown in FIG. 1, the separator 30 includes a porous substrate 31 and a porous coating 32 disposed on one surface of the porous substrate 31 along its thickness direction. It should be understood that the porous coating 32 may also be disposed on both surfaces of the porous substrate 31 along its thickness direction (as shown in FIG. 2).

The following describes some embodiments of this application more specifically by using examples and comparative examples. Various tests and evaluations are performed in the following methods. In addition, unless otherwise specified, "part" and "%" are based on weight.

**Test methods and equipment:**

### Testing the number of polymer particles in a 130µm×100µm region on a surface of the porous coating:

Cut a separator applied with the porous coating into 10mm×10mm samples, then place the samples under SEM observation at 500 times magnification, and select any 5 regions of 130µm × 100µm (that is, regions observable through one eyepiece) in the field of view. Record separately the numbers of polymer particles with a maximum diameter less than 5µm, with a maximum diameter in the range of 5µm to 14µm, and with a maximum diameter greater than 14µm in each selected region, and then take the average values. This gives the numbers of polymer particles with a maximum diameter less than 5µm, with a maximum diameter in the range of 5µm to 14µm, and with a maximum diameter greater than 14µm in a 130µm×100µm region on the surface of the porous coating, respectively.

### Testing the Tg of the polymer:

Use a differential scanning calorimeter to test the Tg of the polymer.

### Testing the swelling degree of the polymer:

Add the polymer into water to obtain an emulsion with a solid content of 30wt%. Apply the emulsion on a glass substrate and dry it at 85°C to obtain a polymer film. Immerse the polymer film with a mass of m1 in the test electrolyte at 85°C for 6h, then record the mass of the polymer film at this time as m2. The swelling degree of the polymer=(m2-m1)/m1×100%. Perform the test for 3 times for each example or comparative example, take the average value as the final swelling degree of the polymer.

The test electrolyte is composed of an organic solvent and lithium hexafluorophosphate. The organic solvent is obtained by mixing EC, PC, and DMC in a mass ratio of 7:2:1. The concentration of lithium hexafluorophosphate is 1mol/L.

### Testing the particle size of the polymer particles:

In accordance with the national standard GB/T 19077-2016 (particle size distribution laser diffraction method), use a laser particle size analyzer (for example, Malvern Master Size 3000) to determine Dᵥ10, Dᵥ50, and Dᵥ90.

### Testing the water contact angle of the porous coating:

Use a water contact angle tester to perform the test.

### Testing the thickness:

Testing the thickness range and COV of the separator: Measure one point every 5mm along the length direction of the separator using a micrometer, for a total of 30 points, and then calculate the thickness range and COV of the separator. The thickness range and COV are commonly known thickness range and COV in the prior art and can be calculated according to methods known in the prior art.

### Testing the wet-press adhesion force:

Fully charge the lithium-ion battery, disassemble it, and obtain the part where the separator is combined with the positive electrode. Cut the combined part into strip samples of 15mm×54.2mm and test the adhesion force between the porous coating of the separator and the positive electrode (positive electrode material layer) according to the national standard GB/T 2792-1998 ("Test Method for Peel Strength of Pressure-Sensitive Tape at 180° Angle").

### Determination of the gelation phenomenon:

Discharge the lithium-ion batteries in each example and comparative example, then disassemble them and observe whether there is a gel-like substance inside each lithium-ion battery. If there is a gel-like substance, the separator is deemed to have a gelation phenomenon and marked as "Yes"; if there is no gel-like substance, the separator is deemed not to have a gelation phenomenon and marked as "No".

### Determination of lithium precipitation degree:

Place the lithium-ion battery in a 0°C thermostat and leave it standing for 60min to make the lithium-ion battery reach a constant temperature. At 0°C, charge the lithium-ion battery that has reached a constant temperature at a constant current of 1C to 4.45V, then charge it at a constant voltage of 4.45V to 0.025C, leave it standing for 5 minutes, and then discharge it at a constant current of 1C to 3.0V This is one charge-discharge cycle. After 10 charge-discharge cycles, charge the battery again at a constant current of 1C to 4.45V, then charge it at a constant voltage of 4.45V to 0.025C to obtain a fully charged battery that has cycled 10 times. Disassemble the battery in a drying room with a humidity of less than 5%, and take photos to record the state of the negative electrode plate.

Determine the lithium precipitation degree of the lithium-ion battery according to the following standards:
No lithium precipitation: no lithium deposits on the surface of the negative electrode plate;
Slight lithium precipitation: lithium deposits on less than 10% of the surface area of the negative electrode plate;
Moderate lithium precipitation: lithium deposits on 10% to 30% of the surface area of the negative electrode plate; and
Severe lithium precipitation: lithium deposits on more than 30% of the surface area of the negative electrode plate.

### Testing for purple/black spots:

Place the lithium-ion battery in a 0°C thermostat and leave it standing for 60min to make the lithium-ion battery reach a constant temperature. At 0°C, charge the lithium-ion battery that has reached a constant temperature at a constant current of 1C to 4.45V, then charge it at a constant voltage of 4.45V to 0.025C, leave it standing for 5 minutes, and then discharge it at a constant current of 1C to 3.0V This is one charge-discharge cycle. After 500 charge-discharge cycles, charge the battery again at a constant current of 1C to 4.45V, then charge it at a constant voltage of 4.45V to 0.025C to obtain a fully charged battery that has cycled 500 times. Disassemble the battery in a drying room with a humidity of less than 5%, and take photos to record whether there are purple/black spots at the corner interfaces of the negative electrode plate. If there are purple/black spots, the lithium-ion battery is deemed to have purple/black spots and marked as "Yes"; if there are no purple/black spots, the lithium-ion battery is deemed not to have purple/black spots and marked as "No".

### Testing the winding yield:

Use a winding device to continuously produce 1000 lithium-ion batteries, and count the number of scrapped lithium-ion batteries due to tab misalignment. Winding yield=(1-number of scrapped batteries due to tab misalignment/1000)× 100%. If the misalignment is severe enough to prevent welding, it is determined as tab misalignment.

### Example 1-1

### <Preparation of positive electrode>

A positive electrode active material LiCoO₂, a conductive agent conductive carbon black, and a binder polyvinylidene fluoride were mixed at a mass ratio of 96:2:2, added with N-methylpyrrolidone (NMP), and well stirred by a vacuum stirrer to obtain a positive electrode slurry with a solid content of 70wt%. The positive electrode slurry was uniformly applied onto one surface of a positive electrode current collector aluminum foil with a thickness of 12µm, and the aluminum foil was dried at 120°C for 1h to obtain a positive electrode having a single surface coated with a positive electrode material layer. The foregoing steps were repeated on another surface of the aluminum foil to obtain a positive electrode coated with positive electrode material layers on two surfaces. After cold pressing, cutting, and slitting, drying was performed in a vacuum at 120°C for 1 h to obtain a 74mm×867mm positive electrode.

### <Preparation of negative electrode>

A negative electrode active material graphite, a binder styrene-butadiene rubber, and a negative electrode thickener sodium carboxymethyl cellulose were mixed at a mass ratio of 97.4: 1.4: 1.2, added with deionized water. The foregoing substances were well stirred by a vacuum mixer to obtain a negative electrode slurry, where a solid content of the negative electrode slurry was 75%. The negative electrode slurry was evenly applied on one surface of a negative electrode current collector copper foil having a thickness of 12µm, and the copper foil was dried at 120°C to obtain a negative electrode having a coating thickness of 130µm and with one surface coated with the negative electrode material layer. The foregoing steps were repeated on another surface of the aluminum foil to obtain a negative electrode coated with negative electrode material layers on two surfaces. After cold pressing, cutting, and slitting, drying was performed in a vacuum at 120°C for 1h to obtain a 78mm×875mm negative electrode.

### <Preparation of electrolyte>

In a glove box under argon atmosphere with a moisture content<10ppm, EC, PC, and DMC were mixed at a mass ratio of 3:2.5:4.5 to obtain an organic solvent, and then a lithium salt Lithium hexafluorophosphate was added to the organic solvent to obtain an electrolyte. A concentration of the lithium salt was 1 mol/L.

### <Preparation of separator>

The cyclohexyl methacrylate and isobutyl acrylate were mixed in a mass ratio of 5:95 to obtain an auxiliary binder. The polymer styrene-isooctyl acrylate copolymer, the auxiliary binder, the thickener sodium carboxymethyl cellulose, and the wetting agent polyoxyethylene fatty alcohol ether were mixed in a mass ratio of 90:6.5:0.5:3, added with water, and then stirred evenly to obtain a porous coating slurry with a solid content of 10wt%. The porous coating slurry was evenly applied on one surface of a porous substrate with a thickness of 16µm using a micro gravure coating method, and then dried at 45°C to obtain a separator coated with the porous coating on one side. The above steps were repeated to obtain a separator applied with the porous coating on two sides. The polymer had a Dᵥ10 of 2.5µm, Dᵥ50 of 5µm, Dᵥ90 of 9.5µm, sphericity of 0.8, and Tg of 50°C. The mass ratio of the monomer styrene to monomer isooctyl acrylate in the styrene-isooctyl acrylate copolymer was 9: 1. The material of the porous substrate was polypropylene with a weight-average molecular weight of 1000000, the pore size of the porous substrate was 30nm, the surface density of the porous coating was 0.2g/m², and the thickness of the porous coating was 14µm.

### <Preparation of lithium-ion battery>

The prepared positive electrode, separator, and negative electrode were stacked in sequence, so that the separator was sandwiched between the positive electrode and the negative electrode for separation. Then the resulting stack was wound to obtain an electrode assembly. The electrode assembly was put into an aluminum-plastic film packaging bag which was filled with the electrolyte after drying, followed by processes such as vacuum packaging, standing, formation, degassing, and cutting to obtain a lithium-ion battery.

### Example 1-2 to example 1-9

These examples were the same as example 1-1 except that related preparation parameters were adjusted according to Table 1-1.

### Example 2-1 to example 2-6

These examples were the same as example 1-3 except that related preparation parameters were adjusted according to Table 2-1.

### Example 3-1 to example 3-4

These examples were the same as example 1-3 except that related preparation parameters were adjusted according to Table 3-1.

### Example 4-1 to example 4-3

These examples were the same as example 1-3 except that related preparation parameters were adjusted according to Table 4-1.

### Example 5-1 to example 5-6

These examples were the same as example 1-1 except that in the step of <Preparation of electrolyte>, in the preparation of the organic solvent, the carboxylic acid ester was added according to Table 5 and related parameters were adjusted according to Table 5.

### Comparative example 1

This comparative example was the same as example 1-1 except that in <Preparation of separator>, the polymer was replaced with PVDF-HFP, where a percentage of HFP in PVDF-HFP was 15%.

The related preparation parameters of the examples and comparative examples are shown in Table 1-1 to Table 4-1 and Table 5, and the performance parameters are shown in Table 1-2 to Table 4-2 and Table 5.

**Table 1-1**

| | Polymer Type | Number of Polymer Particles in a 130µm× 100µm Region on Surface of the Porous Coating (Pieces) | | | Particle Size of Polymer Particles | | |
|---|---|---|---|---|---|---|---|
| | | Maximum Diameter Less Than 5µm | Maximum Diameter in Range of 5µm to 14µm | Maximum Diameter Greater Than 14µm | Dᵥ10 (µm) | Dᵥ50 (µm) | Dᵥ90 (µm) |
| Example 1-1 | Styrene-isooctyl acrylate copolymer (mass ratio 9:1) | 25 | 150 | 0 | 2.3 | 5 | 7.6 |
| Example 1-2 | Styrene-isooctyl acrylate copolymer (mass ratio 8:2) | 30 | 147 | 0 | 2.1 | 5 | 8.2 |
| Example 1-3 | Styrene-isooctyl acrylate copolymer (mass ratio 7:3) | 33 | 162 | 0 | 1.9 | 5 | 7.3 |
| Example 1-4 | Styrene-isooctyl acrylate copolymer (mass ratio 6:4) | 27 | 166 | 0 | 2.7 | 5 | 8.4 |
| Example 1-5 | Styrene-isooctyl acrylate copolymer (mass ratio 5:5) | 29 | 158 | 1 | 2.2 | 5 | 7.7 |
| Example 1-6 | Polyvinylidene fluoride homopolymer | 30 | 170 | 0 | 1.9 | 5.2 | 80 |
| Example 1-7 | PVDF-HFP (mass ratio 98:2) | 21 | 177 | 1 | 2.3 | 5.5 | 8.7 |
| Example 1-8 | Styrene-isobutyl acrylate copolymer | 30 | 175 | 0 | 2.6 | 5.8 | 8.5 |
| Example 1-9 | Styrene-butadiene rubber | 25 | 164 | 0 | 2.2 | 5.4 | 9.1 |
| Comparative example 1 | PVDF-HFP (mass ratio 85:15) | All | 0 | 0 | 0.3 | 0.7 | 1.4 |

Note: In example 1, the 'mass ratio 9:1' in the styrene-isooctyl acrylate copolymer (mass ratio 9: 1) indicates that the mass ratio of styrene monomer to iso-octyl acrylate monomer in the styrene-isooctyl acrylate copolymer is 9: 1. The descriptions for the other examples and comparative examples follow the same convention.

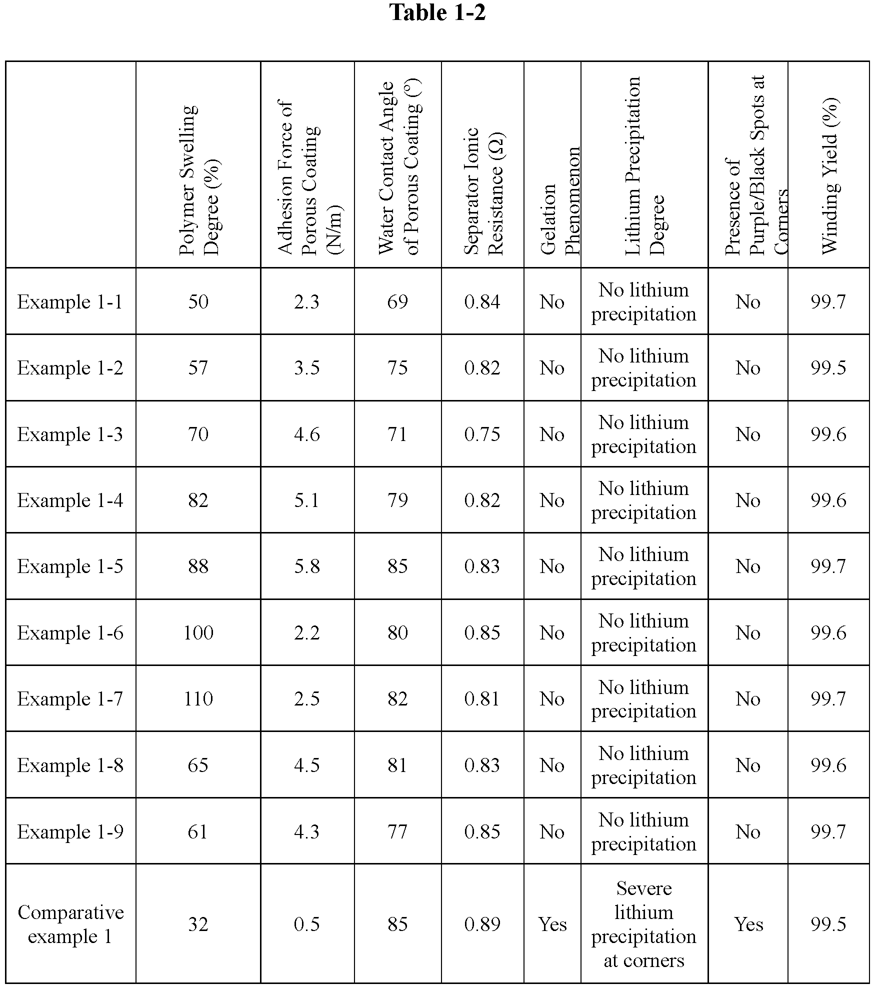

As shown in Table 1-1 and Table 1-2, from example 1-1 to example 1-9 and comparative example 1, it can be seen that when the type of the polymer is within the scope of this application, the prepared separator exhibits good thickness uniformity, electrolyte resistance, and thermal stability, as well as suitable ionic resistance. The gelation phenomenon of the separator is alleviated. The lithium-ion battery using the separator described in this application shows effective improvement in lithium precipitation and corner purple/black spot issues, and the lithium-ion battery has better packaging performance and good winding yield.

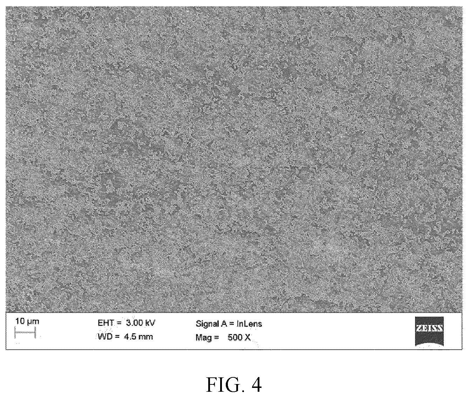

FIG. 3 shows the SEM image of the polymer particles in example 1-3, and FIG. 4 shows the SEM image of the polymer particles in comparative example 1. In the SEM image of the polymer particles in example 1-3, in any 130µm×100µm region on the surface of the porous coating, the number of polymer particles with a maximum diameter less than 5µm is 33, the number of polymer particles with a maximum diameter in the range of 5µm to 14µm is 162, and the number of polymer particles with a maximum diameter greater than 14µm is 0. It can be seen that most of the polymer particles have a maximum diameter in the range of 5µm to 14µm, indicating that the polymer particles in this application have a relatively large particle size. It can also be seen from FIG. 3 that the polymer particles are relatively dispersed, and the clustering phenomenon is not obvious. In the SEM image of the polymer particles in comparative example 1, the particle sizes of the polymer particles are basically at the nanoscale, and due to the smaller particle sizes, there is an obvious large-area clustering phenomenon among the polymer particles.

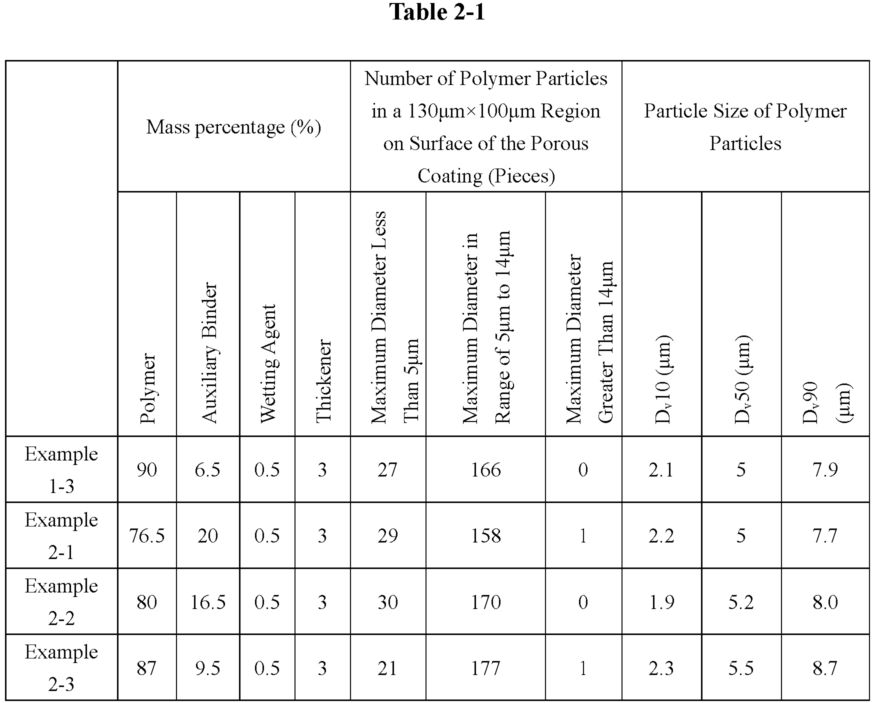

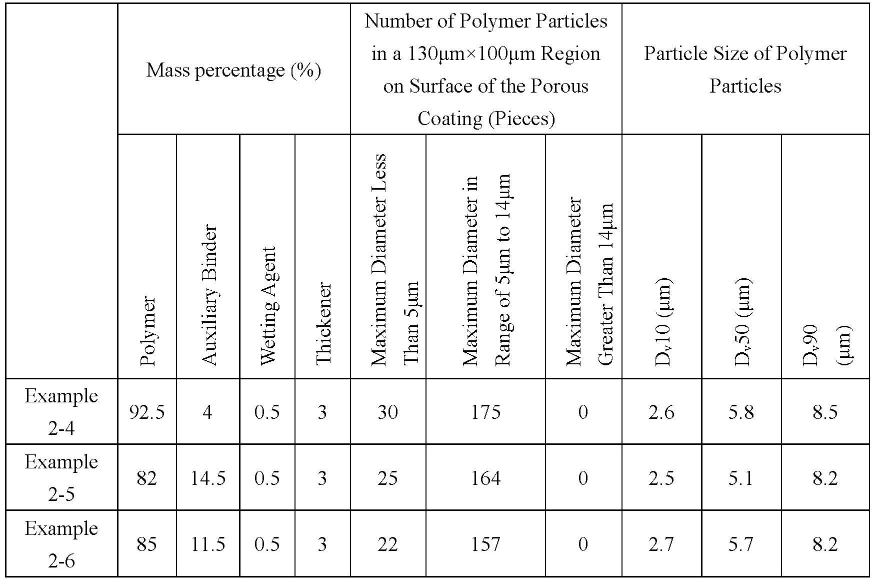

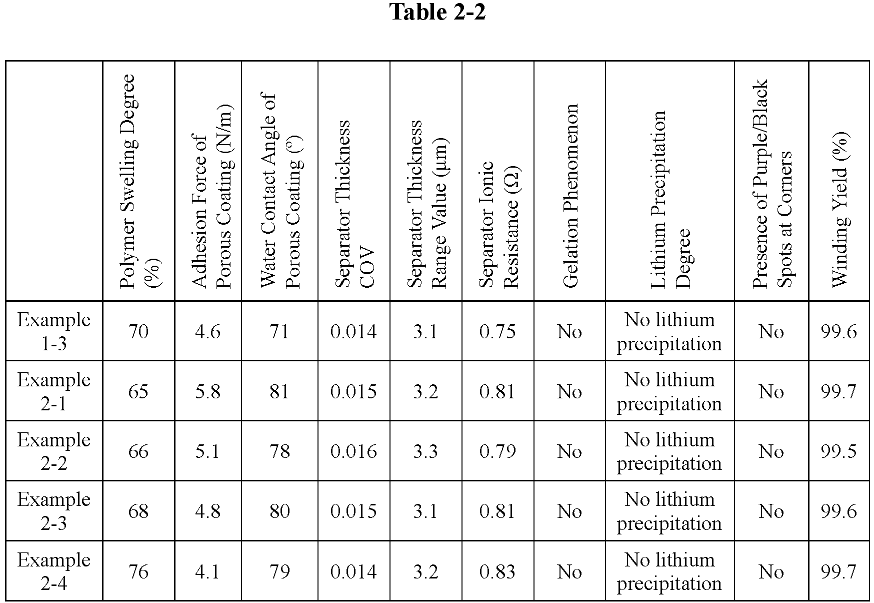

As can be seen from Table 2-1 and Table 2-2, the mass percentages of the polymer, auxiliary binder, thickener, and wetting agent in the porous coating usually may affect the performance of the separator and the lithium-ion battery. From example 1-3 and example 2-1 to example 2-6, it can be seen that when the mass percentage of the polymer, auxiliary binder, thickener, and wetting agent in the porous coating is within the scope of this application, the prepared separator exhibits good thickness uniformity, electrolyte resistance, and thermal stability, as well as suitable ionic resistance. The gelation phenomenon of the separator is alleviated. The lithium-ion battery using the separator described in this application shows effective alleviation in lithium precipitation and corner purple/black spot issues, and the lithium-ion battery has good packaging performance and winding yield. Especially when the polymer used is styrene-isooctyl acrylate copolymer (mass ratio 7:3), a mass percentage of the polymer is 90%, a mass percentage of the auxiliary binder is 6.5%, and a water contact angle of the porous coating is within the scope of this application, the separator has the lowest ionic resistance.

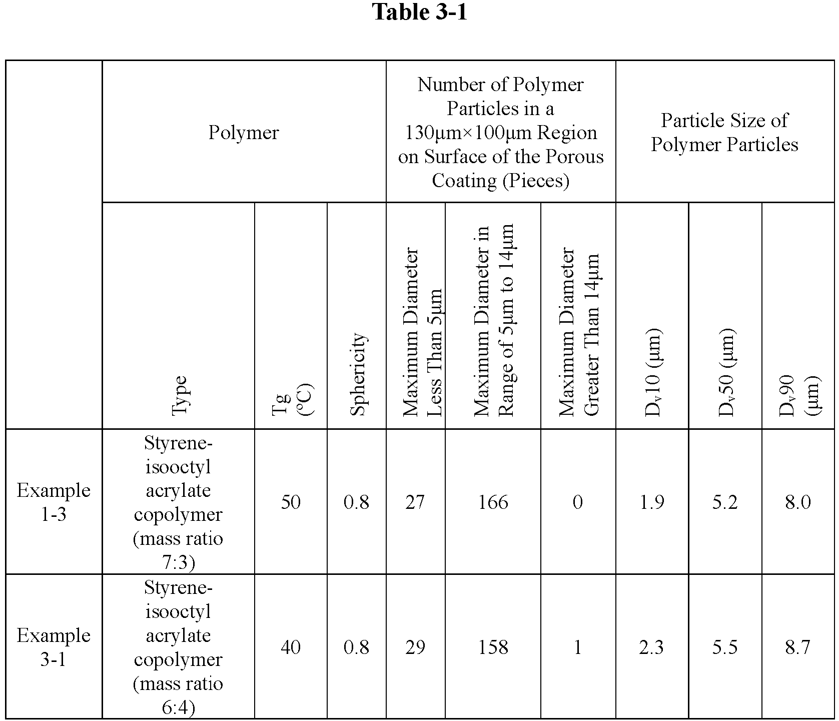

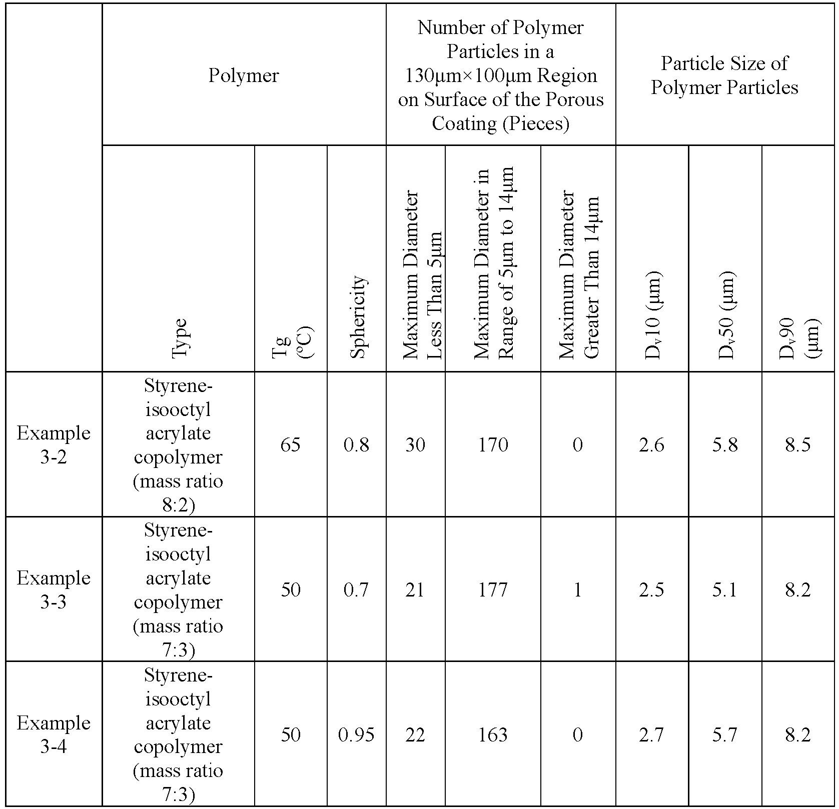

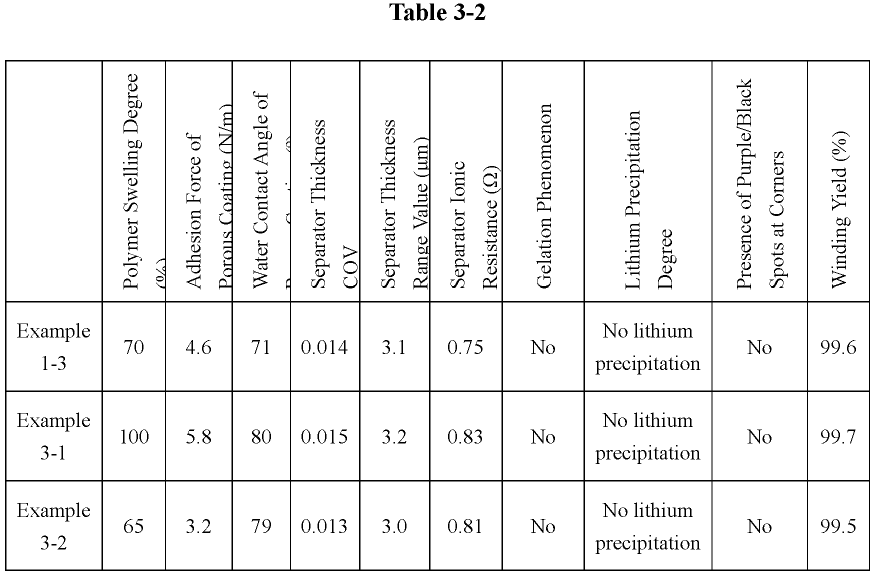

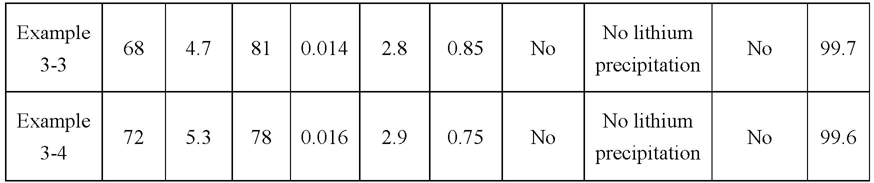

As can be seen in Table 3-1 and Table 3-2, the Tg and sphericity of the polymer usually affect the performance of the separator and the lithium-ion battery. From example 1-3 and example 3-1 to example 3-4, it can be seen that when the Tg and sphericity of the polymer are within the scope of this application, the prepared separator exhibits good thickness uniformity, electrolyte resistance, and thermal stability, as well as suitable ionic resistance. The gelation phenomenon of the separator is alleviated. The lithium-ion battery using the separator described in this application shows effective alleviation in lithium precipitation and corner purple/black spot issues, and the lithium-ion battery has good packaging performance and winding yield.

**Table 4-1**

| | Surface Density of the Porous Coating (g/m²) | Number of Polymer Particles in a 130µm×100µm Region on Surface of the Porous Coating (Pieces) | | | Particle Size of Polymer Particles | | |
|---|---|---|---|---|---|---|---|
| | | Maximum Diameter Less Than 5µm | Maximum Diameter in Range of 5µm to 14µm | Maximum Diameter Greater Than 14µm | Dᵥ10 (µm) | Dᵥ50 (µm) | Dᵥ90 (µm) |
| Example 1-3 | 0.2 | 27 | 166 | 0 | 2.3 | 5 | 8.7 |
| Example 4-1 | 0.1 | 29 | 158 | 1 | 2.6 | 5.8 | 8.5 |
| Example 4-2 | 0.3 | 30 | 170 | 0 | 2.5 | 5.1 | 8.2 |
| Example 4-3 | 0.4 | 21 | 177 | 1 | 2.7 | 5.7 | 8.2 |

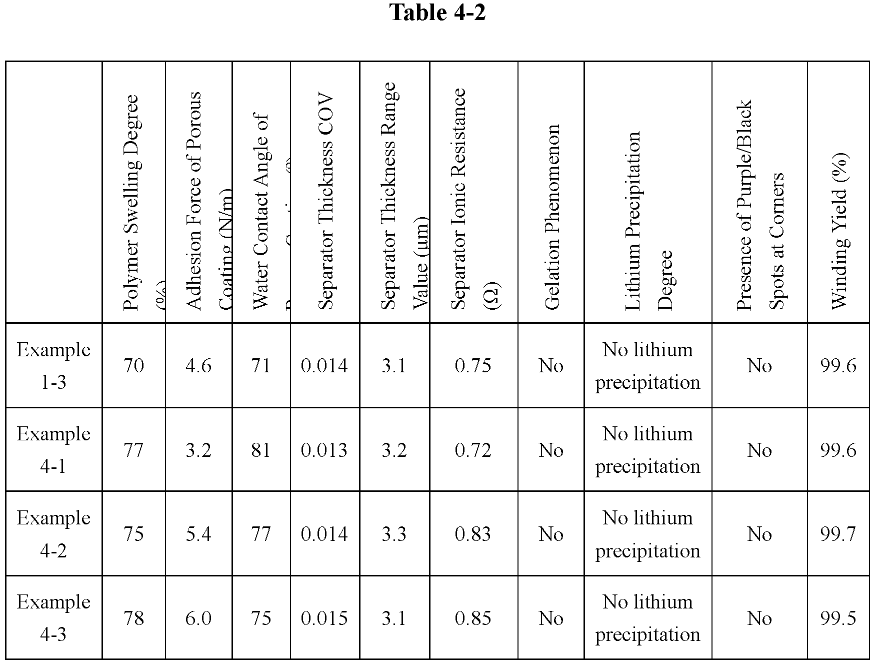

As can be seen in Table 4-1 and Table 4-2, the surface density of the porous coating usually affects the performance of the separator and the lithium-ion battery. From example 1-3 and example 4-1 to example 4-3, it can be seen that when the surface density of the porous coating is within the scope of this application, the prepared separator exhibits good thickness uniformity, electrolyte resistance, and thermal stability, as well as suitable ionic resistance. The gelation phenomenon of the separator is alleviated. The lithium-ion battery using the separator described in this application shows effective alleviation in lithium precipitation and corner purple/black spot issues, and the lithium-ion battery has good packaging performance and winding yield.

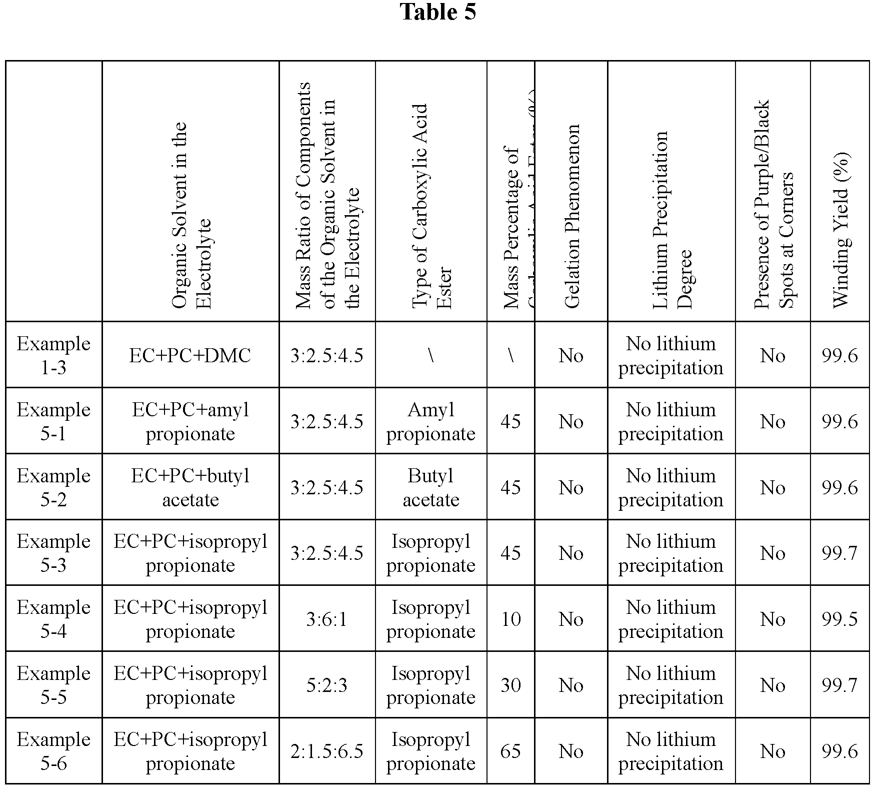

Note: "\" in Table 5 means that a corresponding parameter or substance does not exist.

As shown in Table 5, the components in the electrolyte usually affect the performance of the lithium-ion battery. From example 1-3 and example 5-1 to example 5-6, it can be seen that when the electrolyte contains carboxylic acid ester, and the type and mass percentage of the carboxylic acid ester are within the scope of this application, the lithium-ion battery using the electrolyte described in this application shows effective alleviation in lithium precipitation and corner purple/black spot issues, and the lithium-ion battery has good packaging performance.

The foregoing descriptions are merely preferred embodiments of this application, and are not intended to limit this application. Any modifications, equivalent replacements, improvements, and the like made without departing from the spirit and principle of this application shall fall within the protection scope of this application.

## Claims

1. A separator, comprising a porous substrate and a porous coating disposed on at least one surface of the porous substrate, wherein the porous coating comprises a polymer, the polymer comprising polymer particles; wherein
in a 130µm × 100µm region on a surface of the porous coating, the number of polymer particles with a maximum diameter in a range of 5µm to 14µm is 100 to 180.

2. The separator according to claim 1, wherein in a 130µm×100µm region on the surface of the porous coating, the number of polymer particles with a maximum diameter less than 5µm is 10 to 40, and the number of polymer particles with a maximum diameter greater than 14µm is 0 to 10.

3. The separator according to claim 1, wherein the polymer particles have particle sizes satisfying: 1µm≤Dᵥ10≤3µm, 4µm≤Dᵥ50≤8µm, and 7µm≤Dᵥ90≤20µm.

4. The separator according to claim 1, wherein the polymer is composed of at least one of polyvinylidene fluoride, polyacrylate, styrene-butadiene rubber, polyacrylamide, or polyolefin; wherein
the polyacrylate is polymerized from at least one of the following monomers: styrene, butadiene, methyl methacrylate, acrylonitrile, acrylic acid, methacrylic acid, isobutyl acrylate, isobutyl methacrylate, butyl acrylate, butyl methacrylate, isooctyl acrylate, isooctyl methacrylate, methyl acrylate, or epoxymethyl methacrylate; and
a monomer forming the polyolefin is an olefin with 19 to 35 carbon atoms.

5. The separator according to claim 1, wherein the polymer is composed of at least one of polyvinylidene fluoride, polystyrene-isobutyl acrylate, polystyrene-isooctyl acrylate, or styrene-butadiene rubber.

6. The separator according to claim 1, wherein the porous coating further comprises an auxiliary binder, a wetting agent, and a thickener; wherein
based on a mass of the porous coating, a mass percentage of the polymer is 76.5% to 92.5%, a mass percentage of the auxiliary binder is 4% to 20%, a mass percentage of the wetting agent is 3% to 5%, and a mass percentage of the thickener is 0.5% to 1%.

7. The separator according to claim 1, wherein the polymer satisfies at least one of the following characteristics:
(a) a glass transition temperature of the polymer is 40°C to 65°C;
(b) a swelling degree of the polymer is 50% to 150%; or
(c) a sphericity of the polymer is greater than or equal to 0.7 and less than 1.0.

8. The separator according to claim 1, wherein the porous coating satisfies at least one of the following characteristics:
(i) an adhesion force of the porous coating is 2N/m to 6N/m;
(ii) a water contact angle of the porous coating is 60° to 90°; or
(iii) a surface density of the porous coating is 0. 1g/m² to 0.4g/m².

9. The separator according to claim 1, wherein the separator satisfies at least one of the following characteristics:
(1) a thickness covariance value of the separator is 0.01 to 0.02;
(2) a thickness range value of the separator is 0µm to 3.3µm; or
(3) an ionic resistance of the separator is 0.5Ω to 1.5Ω.

10. An electrochemical device, comprising the separator according to any one of claims 1 to 9.

11. The electrochemical device according to claim 10, further comprising an electrolyte, wherein the electrolyte comprises carboxylic acid ester; wherein
based on a mass of the electrolyte, a mass percentage of the carboxylic acid ester is 10% to 65%.

12. The electrochemical device according to claim 11, wherein the carboxylic acid ester comprises at least one of butyl propionate, amyl propionate, γ-butyrolactone, γ-valerolactone, methyl acetate, ethyl acetate, propyl acetate, isopropyl acetate, butyl acetate, sec-butyl acetate, isobutyl acetate, tert-butyl acetate, methyl propionate, ethyl propionate, propyl propionate, isopropyl propionate, methyl butyrate, ethyl butyrate, propyl butyrate, methyl isobutyrate, ethyl isobutyrate, methyl valerate, ethyl valerate, methyl pivalate, or ethyl pivalate.

13. An electronic device, comprising the electrochemical device according to any one of claims 10 to 12.
